# EUROPEAN PATENT APPLICATION

(11) **EP 4 786 940 A1**
(43) Date of publication of application: **05.08.2026**
(21) Application number: 26150350.2
(22) Date of filing: 06.01.2026
(51) Int. Cl.: G01M 3/04, B63B 19/00, E06B 7/00, G01M 3/06, E06B 3/12

(54) **HYDRAULIC TEST APPARATUS FOR ALUMINUM VENTILATION WINDOW**

(30) Priority: 03.02.2025 KR 20250013032
(71) Applicant: Chungjin Co., Ltd., Jellanam-do 58453 (KR)
(72) Inventor: JUNG, Dong Hyun, Jeollanam-do (KR)
(74) Representative: dompatent

(57) **Abstract**

Disclosed is a hydraulic pressure test apparatus for aluminum ventilation windows, including jigs configured to fix an aluminum ventilation window, and a water tank configured to contain water so that the aluminum ventilation window fixed and lowered by the jigs is immersed therein. The hydraulic pressure test apparatus for aluminum ventilation windows tests for defects in an aluminum ventilation window by detecting water leakage from the aluminum ventilation window placed in the water tank, and for more accurate testing, the hydraulic pressure test apparatus is configured to allow the fixed aluminum ventilation window to move in four directions, i.e., forward, backward, leftward, and rightward.

## Description

### BACKGROUND OF THE INVENTION

### Field of the Invention

The present invention relates to a hydraulic pressure test apparatus for aluminum ventilation windows. More particularly, it relates to a hydraulic pressure test apparatus for aluminum ventilation windows, including jigs configured to fix an aluminum ventilation window, and a water tank configured to contain water so that the aluminum ventilation window fixed and lowered by the jigs is immersed therein.

That is, the present invention relates to a hydraulic pressure test apparatus for aluminum ventilation windows that tests for defects in an aluminum ventilation window by detecting water leakage from the aluminum ventilation window placed in a water tank, and for more accurate testing, the hydraulic pressure test apparatus is configured to allow the fixed aluminum ventilation window to move in four directions, i.e., forward, backward, leftward, and rightward.

### Description of the Related Art

The shipbuilding industry, which is a key industry accounting for about 3% of domestic export and manufacturing employment, is a strategic industry that creates a synergistic effect through close collaboration with related forward (or downstream) and backward (or upstream) industries.

This industry supplies 90% of shipping industry orders (as of 2022) and handles 50% of the heavy plate demand in the (upstream) steel industry, and about 90% of global trade and over 99% of domestic trade are handled by the shipping industry.

Korean shipbuilding companies are leading the global shipbuilding industry by overcoming past recessions and winning orders for high value-added vessels (60%) and eco-friendly vessels (45.6%) (January to October 2023).

The domestic order backlog is at the highest level since 2011 (39.88 million CGT, October 2023), and represents over 30% of global orders since 2017, showing signs of recovery. Global orders are also expected to remain robust, growing at an average annual rate of 1.6% until 2032.

Korea faces challenges such as a narrowing gap with China in high value-added and low-carbon vessels, which is the main types of ships being built in Korea, and intensifying competition from competitors, including the EU and Japan, as they acquire technology.

Further, with the International Maritime Organization (IMO) raising a greenhouse gas reduction target thereof to 100% by 2050, carbon reduction competitiveness is emerging as a key comparative advantage factor in line with the paradigm shift in the shipbuilding industry. In addition, Korea possesses manufacturing and IT capabilities in the digital transformation trend toward smart ships and manufacturing, but still faces persistent challenges, such as a labor shortage and the competitiveness of small and medium-sized shipbuilders and equipment manufacturers.

Meanwhile, shipbuilding equipment is categorized into blocks, engines, cold reserving materials, electrical and communication equipment, piping, and eco-friendly facilities, a lead time from orders from shipbuilding companies to sales by shipbuilding equipment companies is approximately 12 to 18 months, and an increase in placing orders is expected depending on the up-cycle trend in the shipbuilding industry.

An increase in orders among Korean, Chinese, and Japanese shipbuilders due to a boom in the shipbuilding industry has caused expansion of the shipbuilding equipment industry, which is an upstream industry. As shipbuilding equipment and materials, 400 to 700 different types of equipment and materials are used to build a single ship, accounting for about 50% or more of the price of the ship.

Since types of equipment and materials applied to each type of ship are various, planned production and product standardization are difficult, the manufacturing cost per item is high, and improving production efficiency is not easy.

Since shipbuilding equipment and materials operate in a maritime environment with many variables, strict and conservative quality control standards are applied to durability, corrosion resistance, and safety, and the shipbuilding equipment industry is an industry with strict conditions for ship owners to designate a specific market at the time of ordering a ship. However, the global shipbuilding industry is experiencing environmental changes due to increased demand for ships, such as international environmental regulations, strengthened ship safety, three major decarbonization fuels (LNG, ammonia, hydrogen, etc.), and increased maritime cargo volume, as well as diversification of marine space utilization and advanced technological revolutions, such as ICT, and requires strengthened productivity capabilities so as to match a boom in orders.

In the case of equipment and materials requiring simple technological capabilities to reduce costs and improve productivity through fusion with existing production technologies due to recent changes in the competitiveness of the shipbuilding industry value chain and the global shipbuilding industry environment, profitability is expected to continue to deteriorate due to competition with China, which is the number 1 country in the shipbuilding industry.

At present, the Korean domestic shipbuilding industry focuses on low value-added manufacturing and assembly, and high value-added core equipment and materials are procured through imports and licensing, resulting in a low value-added industrial structure, and thus, it is necessary to secure technologies that are suitable for order competitiveness in the ship window field by analyzing production data and manufacturing processes at ship aluminum ventilation window manufacturing sites and developing an automated system for testing hydraulic pressure of ventilation windows in the current simple labor-intensive processes.

In order to secure production capacity and price competitiveness that match revitalization of the shipbuilding industry and order competitiveness, changes in aluminum ventilation window production methods and work environment in the shipbuilding industry are necessary, and technological development to increase profitability and establish a stable growth environment for companies is necessary to achieve sustainable growth.

Windows for ships are broadly categorized into rectangular windows and round windows, which are generally referred to as portholes. Steel and aluminum, both of which are common materials in shipbuilding, are generally used as ship window materials, but most windows are manufactured using aluminum.

Although the number of windows for ships varies depending on the size and type of ship, about 40 to 80 windows are installed on the deckhouse of a large merchant ship. When installed on a ship, windows for ships must satisfy the maximum allowable and design pressure for each type of window for ships, and pass strength and watertightness tests.

It is essential for windows for ships to pass the watertightness test and mechanical strength test (test pressure and load for each design type) in Chapter 8 Equipment Number and Equipment of Part 4 "Hull Equipment" of Rules for the Classification of Steel Ships.

Windows for ships applied to domestic and international small and medium-sized ships and yachts are delivered as cast materials and require about 8 stages of processing, and currently, all major processes, including machining, assembly, and hydraulic testing, are 100% performed manually.

The main processes for aluminum ventilation windows for ships are performed as follows: ① Cast material receipt → ② Lathe machining → ③ Milling → ④ Radial machining → ⑤ Drilling → ⑥ Polishing → ⑦ Coating → ⑧ Assembly → ⑨ Hydraulic testing.

Ventilation windows for ships essentially undergo a hydraulic pressure test after manufacture, assembly, and processing to be delivered to and installed on ships, and standardization of testing work is being implemented by manually applying an appropriate amount of water and pressure for each ventilation window type.

The hydraulic pressure test for aluminum ventilation windows is performed 100% manually in the following order: placing a product on a jig → filling the inside of the product with water → clamping the product → applying internal pressure → performing visual leak inspection (horizonal, vertical, and water leakage) → releasing clamping → extracting the product.

Since the hydraulic pressure test is essential when delivering ventilation windows to shipbuilders, the importance of the test is gradually increasing. The window market, which contributes to various industries, is expected to maintain continuous demand in the future, and is considered as a high value-added industry.

It is necessary to development related automation technologies to strengthen production capacity depending on demand, such as revitalization of the shipbuilding and marine industries and the window and door market, increase in orders from large shipbuilders, and large-scale projects from domestic companies, and it is time to change the production and manufacturing methods of aluminum ventilation windows in the shipbuilding industry to secure production capacity and price competitiveness that match the volume and competitiveness of orders received in the shipbuilding industry, such as stable quality assurance of aluminum ventilation windows, cost reduction, and resolution of manpower issues.

In this regard, Korean Patent Registration No. 10-2660323 discloses a lower adsorption-type automatic assembly apparatus for assemblies to enhance the watertightness and productivity of an aluminum ventilation window for ships.

In the conventional aluminum window manufacturing process, an assembly process involves applying pressure for final assembly. To overcome a conventional problem of performing final assembly while not maintaining a constant pressure due to the assembly process which is manually performed, the above technology relates to the lower adsorption-type automatic assembly apparatus for assemblies to enhance the watertightness and productivity of the aluminum ventilation window for ships, that is capable of providing a constant pressure in a lower adsorption manner to improve the quality of the ventilation window.

### RELATED ART DOCUMENT

### PATENT DOCUMENT

Korean Patent Registration No. 10-2660323 (Publication Date: March 24, 2024)
Korean Patent Registration No. 10-0871413 (Publication Date: December 5, 2008)
Korean Patent Laid-open Publication No. 10-2024-0118260 (Laid-open Publication Date: August 5, 2024)
Korean Patent Registration No. 10-2613561 (Publication Date: December 13, 2023)

### SUMMARY OF THE INVENTION

Therefore, the present invention has been made in view of the above problems, and it is an object of the present invention to provide a hydraulic pressure test apparatus for aluminum ventilation windows, including jigs configured to fix an aluminum ventilation window, and a water tank configured to contain water so that the aluminum ventilation window fixed and lowered by the jigs is immersed therein.

It is another object of the present invention to provide a hydraulic pressure test apparatus for aluminum ventilation windows that is configured to allow a fixed aluminum ventilation window to move in four directions, i.e., forward, backward, leftward, and rightward, for more accurate testing, when testing for defects in the aluminum ventilation window by detecting water leakage from the aluminum ventilation window placed in a water tank.

In accordance with the present invention, the above and other objects may be accomplished by the provision of a hydraulic pressure test apparatus for aluminum ventilation windows, including a base (10), a water tank (20) provided on one side of the base (10), an upper plate (30) coupled to the base (10) via shafts (11) provided on an upper surface of the base (10) and configured to extend upward, a height adjustment cylinder (40) coupled to an upper surface of the upper plate (30), an intermediate plate (50) configured such that a rod of the height adjustment cylinder (40) is coupled thereto, and controlled in upward and downward directions, a lower plate (60) coupled to the intermediate plate (50) to be spaced downwardly apart from the intermediate plate (50) via first separation bars (52), an upper jig (70) configured such that a rod of a clamp cylinder (60a) coupled to an upper surface of the lower plate (60) is coupled to the upper jig (70) and controlled in the upward and downward directions, and a lower jig (90) coupled to the lower plate (60) to be spaced downwardly apart from the lower plate (60) via second separation bars (61), wherein a control unit capable of controlling a plate unit, configured to fix a ventilation window mounted thereon, in forward, backward, leftward, and rightward directions is coupled to an upper surface of the lower jig (90) so as to test for leakage of the ventilation window immersed in water in the water tank (20), an upper surface of the upper plate (30) is provided with an upper plate bracket (31) having a designated shape, and an intermediate plate straight moving guide (32) coupled to the upper plate bracket 31 by a bolt, having a designated length, and configured to pass through the upper plate (30) to extend downward, the intermediate plate (50) is assisted in upward and downward control thereof by intermediate plate ball bushings (51) coupled to the shafts (11), a lower plate bracket (62) is coupled to the upper surface of the lower plate (60), and an upper jig straight moving guide (63) coupled to the lower plate bracket (62) by bolt fastening is coupled to the upper jig (70) to assist in the upward and downward control of the upper jig (70) so that the upper jig (70) moves upward and downward in a straight line, a clamp plate (80) is coupled to a lower surface of the upper jig (70) by a plurality of bolts, and a plurality of clamps (81) is coupled to a lower portion of the clamp plate 80) by bolt fastening, so that the clamps (81) come into contact with the upper surface of the lower jig (90) by controlling the upper jig (70) to be lowered, the control unit comprises two upward and downward controllers (91), each comprising a screw (912) coupled between two side walls (911) and a forward and backward guide body (913) coupled to one side of the screw (912), the forward and backward guide body (913) has screw threads formed on an inner wall of a hole through which the screw (912) passes so as to be engaged with screw threads of the screw (912), so that the forward and backward guide body (913) moves forwards and backwards with respect to the ventilation window based on rotation of the screw (912), a bracket (92) bent in an "L" shape is provided on each of the two forward and backward guide bodies (913) of the two forward and backward controllers (91) to be coupled to each of the two forward and backward guide bodies (913), a connection plate (921) is provided to connect corresponding sides of the two brackets (92), and a second screw (922) is provided to connect the other sides of the two brackets 92, and a leftward and rightward guide body (923) is coupled to the second screw (922), the leftward and rightward guide body (923) is coupled to the second screw (922) such that the second screw (922) penetrates the leftward and rightward guide body (923) and screw threads of the second screw (922) and screw threads of the leftward and rightward guide body (923) are engaged with each other, so as to allow the leftward and rightward guide body (923) to move leftwards and rightwards based on rotation of the second screw (922), and the plate unit configured to fix the ventilation window is provided on an upper portion of the leftward and rightward guide body (923), so that the ventilation window fixedly mounted on the plate unit together with the brackets (92) is movable forwards and backwards by the forward and backward controllers (91), and is movable leftwards and rightwards by the brackets (92).

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a view illustrating a hydraulic pressure test apparatus for aluminum ventilation windows according to the present invention;
FIG. 2 is a side view of the hydraulic pressure test apparatus of FIG. 1;
FIG. 3 is view showing a unit for moving an aluminum ventilation window, in the hydraulic pressure test apparatus according to the present invention; and
FIG. 4 is a view showing one example of the hydraulic pressure test apparatus to which the unit of FIG. 3 is coupled.

### DETAILED DESCRIPTION OF THE INVENTION

With reference to the drawings, the present invention relates to a hydraulic pressure test apparatus for aluminum ventilation windows.

Specifically, the present invention relates to a hydraulic pressure test apparatus for aluminum ventilation windows that is configured to detect leakage from an aluminum ventilation window, and includes jigs configured to fix the aluminum ventilation window, and a water tank configured to contain water so that the aluminum ventilation window fixed and lowered by the jigs is immersed therein.

That is, the present invention relates to a hydraulic pressure test apparatus for aluminum ventilation windows that tests for defects in an aluminum ventilation window by detecting water leakage from the aluminum ventilation window placed in a water tank, and for more accurate testing, the hydraulic pressure test apparatus is configured to allow the fixed aluminum ventilation window to move in four directions, i.e., forward, backward, leftward, and rightward.

Hereinafter, the hydraulic pressure test apparatus for aluminum ventilation windows according to the present invention will be described with reference to the drawings.

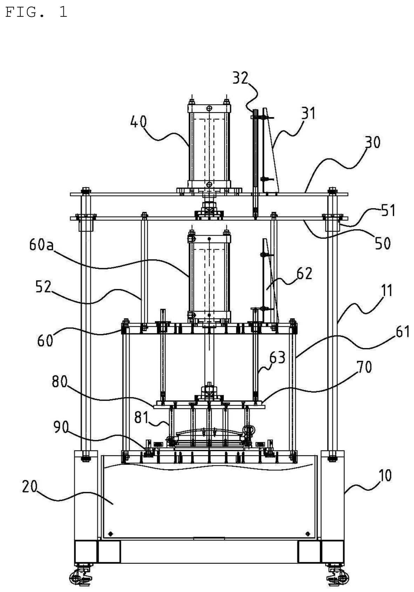

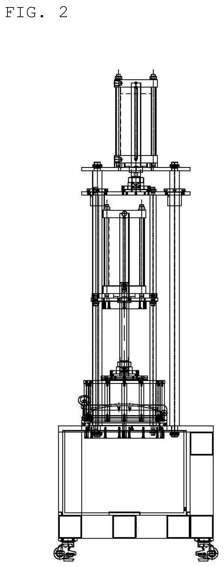

FIG. 1 is a view illustrating the hydraulic pressure test apparatus for aluminum ventilation windows according to the present invention, and FIG. 2 is a side view of the hydraulic pressure test apparatus of FIG. 1.

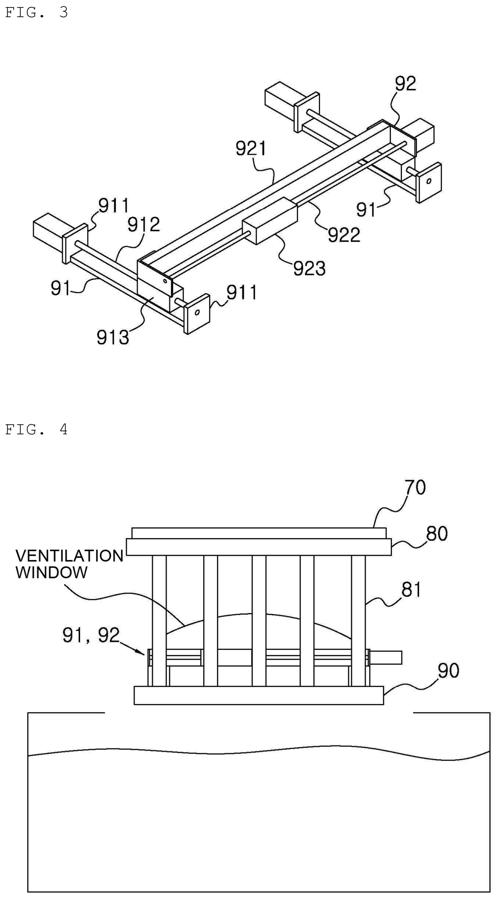

In addition, FIG. 3 is view showing a unit for moving an aluminum ventilation window, in the hydraulic pressure test apparatus according to the present invention, and FIG. 4 is a view showing one example of the hydraulic pressure test apparatus to which the unit of FIG. 3 is coupled.

Referring to the accompanying drawings, the hydraulic pressure test apparatus for aluminum ventilation windows according to the present invention includes a base 10, and a water tank 20 provided on one side of the base 10.

Here, although the water tank 20 accommodates contents for the hydraulic pressure test of the ventilation window, the contents are not the primary aspect of the present invention, and a detailed description thereof will thus be omitted.

In addition, shafts 11 that extend upward are provided on the upper surface of the base 10. An upper plate 30 is coupled to the base 10 via the shafts 11.

The upper surface of the upper plate 30 is provided with an upper plate bracket 31 having a designated shape, and an intermediate plate straight moving guide 32 that is fastened to the upper plate bracket 31 by a bolt or the like, has a designated length, and passes through the upper plate 30 to extend downward.

In addition, a height adjustment cylinder 40 is coupled to the upper surface of the upper plate 30, and the height adjustment cylinder 40 is configured as an air cylinder with a cylinder rod passing through the upper plate 30 to extend downward.

An intermediate plate 50 is provided below the upper plate 30, and the intermediate plate 50 is coupled to the shafts 11 using intermediate plate ball bushings 51 at each corner thereof. In addition, the rod of the height adjustment cylinder 40 is coupled to the intermediate plate 50, and one end of the intermediate plate straight moving guide 32 is coupled to the intermediate plate 50.

Therefore, the intermediate plate 50 may move upwards and downwards under the control of the height adjustment cylinder 40, and at this time, the control is assisted by the intermediate plate ball bushings 51 coupled to the shafts 11.

In addition, the intermediate plate straight moving guide 32 fixed by the upper plate bracket 31 coupled to the upper plate 30 is configured in an antenna type or as an additional cylinder to assist in the control of the intermediate plate 50 in the upward and downward directions, and to enable the upward and downward direction control of the intermediate plate 50 to be performed in a straight line.

One end of each of first separation bars 52 extending downward is connected to the lower portion of the intermediate plate 50 by bolt fastening, or the like, and a lower plate 60 is connected to the other ends of the first separation bars 52.

A clamp cylinder 60a is connected to the lower plate 60, and a rod of the clamp cylinder 60a passes through the lower plate 60 to extend downward.

Here, both the clamp cylinder 60a and the height adjustment cylinder 40 are air cylinders, and a conventional FRL module that performs functions, such as adjusting a main air pressure before air is injected into a cylinder, may be connected to the clamp cylinder 60a and the height adjustment cylinder 40.

In addition, second separation bars 61 extend downward from the lower plate 60, and the second separation bars 61 extend downward to a lower jig 90 to be coupled to the lower jig 90.

In addition, a lower plate bracket 62 is coupled to the upper surface of the lower plate 60, and an upper jig straight moving guide 63 is coupled to the lower plate bracket 62 by bolt fastening, or the like.

The lower end of the upper jig straight moving guide 63 is coupled to an upper jig 70, and the upper jig straight moving guide 63 is configured in an antenna type so that the length of the upper jig straight moving guide 63 is variable.

In addition, as described above, the upper jig 70 is coupled to the upper jig straight moving guides 63, and the rod of the clamp cylinder 60a is coupled to the upper jig 70, so that the upper jig 70 is controlled in the upward and downward directions under the control of the clamp cylinder 60a.

A clamp plate 80 is coupled to the lower surface of the upper jig 70 by a plurality of bolts, and a plurality of clamps 81 is coupled to the lower portion of the clamp plate 80 by bolt fastening.

The clamps 81 are configured to contact the upper surface of the lower jig 90.

Through this configuration, when a ventilation window is placed on the upper surface of the lower jig 90, the upper jig 70 is lowered and the clamps 81 come into contact with the upper surface of the lower jig 90, thus fixing the ventilation window so as not to be separated from the lower jig 90.

As the intermediate plate 50 is lowered by the height adjustment cylinder 40, not only the lower jig 90 but also the upper jig 70 is inserted into the water tank 20, thus enabling testing to be conducted.

Here, in order to place the ventilation window on the upper surface of the lower jig 90, a moving unit shown in FIG. 3 may be installed on the upper surface of the lower jig 90.

First, forward and backward controllers 91 are provided, and each of the forward and backward controllers 91 includes a screw 912 coupled between two side walls 911, and a forward and backward guide body 913 coupled to one side of the screw 912.

Here, bearings may be provided at coupling portions of the screw 912 to facilitate rotation of the screws 912.

In addition, the forward and backward guide body 913 has screw threads that are formed on the inner wall of a hole through which the screw 912 passes so as to be engaged with screw threads of the screw 912, and as the screw 912 rotates, the forward and backward guide body 913 moves forwards and backwards with respect to the ventilation window.

Here, a bracket 92 bent in an "L" shape is provided on each of the forward and backward guide bodies 913 of the forward and backward controllers 91. Since two forward and backward controllers 91 are provided, the bracket 92 is coupled to each of the two forward and backward guide bodies 913, and in this case, bolt coupling may be used.

In addition, a connection plate 921 that connects corresponding sides of the two brackets 92, which face each other, is provided, a second screw 922 is provided to connect the other sides of two brackets 92, and a leftward and rightward guide body 923 is coupled to the second screw 922.

Here, the leftward and rightward guide body 923 is coupled to the second screw 922 such that the second screw 922 penetrates the leftward and rightward guide body 923 and screw threads of the second screw 922 and screw threads of the leftward and rightward guide body 923 are engaged with each other, thereby allowing the leftward and rightward guide body 923 to move leftwards and rightwards based on rotation of the second screw 922.

Here, separate power sources (e.g., motors) for the rotation of the screws 912 and the second screw 922 may be further provided.

In addition, the motors may include gear components for coupling shafts of the motors to the screws 912 and 922.

Here, the leftward and rightward guide body 923 may be configured to have a greater size than the forward and backward guide bodies 913.

This allows a plate unit (not shown) that fixes the ventilation window to be coupled to the upper portion of the leftward and rightward guide body 923, and the plate unit is configured to include all means for mounting the ventilation window conceivable by those skilled in the art.

Therefore, the ventilation window fixedly mounted on the plate unit together with the brackets 92 may move forward and backward by the forward and backward controllers 91, and may move leftward and rightward by the brackets 92.

Therefore, the ventilation window, immersed in the water within the water tank 20, is allowed to move forward, backward, leftward, and rightward in the water, thereby enabling water leakage to be more effectively detected.

Further, although not shown in the drawings, a protrusion having a "∩" shape may be formed on one side of the upper surface of the leftward and rightward guide body 923, to which the plate unit is coupled, to have a designated length, and a hole extending in the longitudinal direction may be formed within the protrusion. In addition, coupling brackets configured to finish both ends of the protrusion are provided on on the lower surface of the plate unit, a hinge pin is connected between the coupling brackets, and the hinge pin penetrates the hole of the protrusion. Here, by coupling one or more torsion springs to one side of the hinge pin, the plate unit may be rotated by a predetermined angle about the hinge pin as an axis, and while the rotation of the plate unit is controlled by the torsion spring, the plate unit may be rotated by the water in the water tank 20 and then returned to the original position thereof, that is, in the horizontal direction of the plate unit, by the torsion spring.

Therefore, when testing for leakage of the ventilation window in the water of the water tank 20, the ventilation window may be more efficiently tested.

As is apparent from the above description, a hydraulic pressure test apparatus for aluminum ventilation windows according to the present invention may minimize the ranges of errors in the operation of cylinders and product mounting jigs, and provide an excellent effect compared to the above-described manual work, when performing a hydraulic pressure test through a jig device for aluminum ventilation windows that enables LM bushings to be used to secure close contact and airtight performance of a product.

The above description with reference to the accompanying drawings shows only the main aspects of the present invention, and those skilled in the art will apparent that the present invention is not limited to the configuration of the drawings, and various designs are possible within the technical scope of the present invention as disclosed in the accompanying claims.

## Claims

1. A hydraulic pressure test apparatus for aluminum ventilation windows, comprising:
a base (10);
a water tank (20) provided on one side of the base (10);
an upper plate (30) coupled to the base (10) via shafts (11) provided on an upper surface of the base (10) and configured to extend upward;
a height adjustment cylinder (40) coupled to an upper surface of the upper plate (30);
an intermediate plate (50) configured such that a rod of the height adjustment cylinder (40) is coupled thereto, and controlled in upward and downward directions;
a lower plate (60) coupled to the intermediate plate (50) to be spaced downwardly apart from the intermediate plate (50) via first separation bars (52);
an upper jig (70) configured such that a rod of a clamp cylinder (60a) coupled to an upper surface of the lower plate (60) is coupled to the upper jig (70) and controlled in the upward and downward directions; and
a lower jig (90) coupled to the lower plate (60) to be spaced downwardly apart from the lower plate (60) via second separation bars (61),
wherein:
a control unit capable of controlling a plate unit, configured to fix a ventilation window mounted thereon, in forward, backward, leftward, and rightward directions is coupled to an upper surface of the lower jig (90) so as to test for leakage of the ventilation window immersed in water in the water tank (20);
an upper surface of the upper plate (30) is provided with an upper plate bracket (31) having a designated shape, and an intermediate plate straight moving guide (32) coupled to the upper plate bracket 31 by a bolt, having a designated length, and configured to pass through the upper plate (30) to extend downward;
the intermediate plate (50) is assisted in upward and downward control thereof by intermediate plate ball bushings (51) coupled to the shafts (11);
a lower plate bracket (62) is coupled to the upper surface of the lower plate (60), and an upper jig straight moving guide (63) coupled to the lower plate bracket (62) by bolt fastening is coupled to the upper jig (70) to assist in the upward and downward control of the upper jig (70) so that the upper jig (70) moves upward and downward in a straight line;
a clamp plate (80) is coupled to a lower surface of the upper jig (70) by a plurality of bolts, and a plurality of clamps (81) is coupled to a lower portion of the clamp plate 80) by bolt fastening, so that the clamps (81) come into contact with the upper surface of the lower jig (90) by controlling the upper jig (70) to be lowered;
the control unit comprises two upward and downward controllers (91), each comprising a screw (912) coupled between two side walls (911) and a forward and backward guide body (913) coupled to one side of the screw (912);
the forward and backward guide body (913) has screw threads formed on an inner wall of a hole through which the screw (912) passes so as to be engaged with screw threads of the screw (912), so that the forward and backward guide body (913) moves forwards and backwards with respect to the ventilation window based on rotation of the screw (912);
a bracket (92) bent in an "L" shape is provided on each of the two forward and backward guide bodies (913) of the two forward and backward controllers (91) to be coupled to each of the two forward and backward guide bodies (913), a connection plate (921) is provided to connect corresponding sides of the two brackets (92), and a second screw (922) is provided to connect the other sides of the two brackets 92, and a leftward and rightward guide body (923) is coupled to the second screw (922);
the leftward and rightward guide body (923) is coupled to the second screw (922) such that the second screw (922) penetrates the leftward and rightward guide body (923) and screw threads of the second screw (922) and screw threads of the leftward and rightward guide body (923) are engaged with each other, so as to allow the leftward and rightward guide body (923) to move leftwards and rightwards based on rotation of the second screw (922); and
the plate unit configured to fix the ventilation window is provided on an upper portion of the leftward and rightward guide body (923), so that the ventilation window fixedly mounted on the plate unit together with the brackets (92) is movable forwards and backwards by the forward and backward controllers (91), and is movable leftwards and rightwards by the brackets (92).
